# DEMANDE DE BREVET EUROPEEN

(11) **EP 0 810 247 A2**
(43) Date de publication de la demande: **03.12.1997**
(21) Numéro de dépôt: 97401134.8
(22) Date de dépôt: 23.05.1997
(51) Int. Cl.: C08G 18/62, C08G 18/63, C09J 175/04, C08F 210/02

(54) **Compositions adhésives à base de copolymères éthylène-ester d'acide insaturé et contenant des fonctions hydroxyles**

(30) Priorité: 29.05.1996 FR 9606603
(71) Demandeur: ELF ATOCHEM S.A., 92800 Puteaux (FR)
(72) Inventeur: Chenard, Jean-Yves, 64000 Pau (FR); Lebez, Jean, 27000 Evreux (FR); Pierrot, Jean-Michel, 27170 Grosley sur Risle (FR)
(74) Mandataire: Neel, Henry

(57) **Abrégé**

La présente invention concerne des compositions adhésives thermofusibles réticulables sous forme de prépolymère contenant des fonctions isocyanates libres, le dit prépolymère résulte de la réaction d'un polyisocyanate et d'un copolymère (A) de l'éthylène et d'au moins un ester d'acide carboxylique insaturé et contenant des fonctions hydroxyles.

Ces adhésifs réticulent à l'humidité ambiante.

## Description

La présente invention concerne des compositions adhésives à base de copolymères éthylène-ester d'acide insaturé et contenant des fonctions hydroxyles.

Elle concerne plus particulièrement des compositions adhésives thermofusibles réticulables sous forme de prépolymère contenant des fonctions isocyanates libres, le dit prépolymère résulte de la réaction d'un polyisocyanate et d'un copolymère (A) de l'éthylène et d'au moins un ester d'acide carboxylique insaturé et contenant des fonctions hydroxyles.

Cette composition associée généralement à une résine collante (tackifiante) permet de réaliser des collages résistant à température élevée après réticulation des fonctions-NCO libres habituellement sous l'effet de l'humidité atmosphérique.

Les adhésifs se présentent généralement sous forme solide et sont appliqués en phase fondue, il se rigidifient après application en assurant la liaison des surfaces à unir. Cette rigidification résulte habituellement de la polymérisation ou de la polycondensation des composants de base de l'adhésif par post-réticulation. Depuis quelques années, on cherche de plus en plus à présenter également les compositions adhésives sous forme solide. Il s'agit dans ce cas d'adhésifs thermofusibles (hot-melts) ayant pour base une résine thermoplastique, solide à température ambiante, possédant des propriétés adhésives par post-réticulation. Ces adhésifs sont fluidisés à chaud, la liaison des surfaces à unir étant assurée quand l'adhésif redevient rigide au refroidissement. Ces adhésifs thermofusibles résultent généralement de la combinaison de deux constituants de base : une résine thermoplastique et une résine collante (tackifiante), auxquels on peut associer des additifs tels que cire, stabilisant, charge, plastifiants et autres. Les résines thermoplastiques de base les plus connues sont les polyamides, le polypropylène atactique et, en particulier, les copolymères éthylène-acétate de vinyle (EVA). Dans l'état actuel, ces adhésifs thermofusibles possèdent de bonnes propriétés adhésives, mais présentent l'inconvénient de montrer une mauvaise tenue à la chaleur, tenue n'excédant guère 70 à 80° C.

Pour pallier ce désavantage une nouvelle génération de produits thermofusibles réticulables : adhésifs thermofusibles polyuréthannes réticulables, est développée. Ces produits sont préparés de façon classique par réaction de polyisocyanate sur des polyols de type polyester dont l'un au moins est solide à température ambiante. Ces adhésifs s'appliquent à haute température en phase fondue. Ils présentent l'inconvénient d'être incompatibles avec les résines collantes (tackifiant) ce qui restreint fortement les possibilités de formulation. Ceci se traduit alors par une aptitude au collage limitée à certains supports bien définis. En outre, ces produits possèdent des temps ouverts de l'ordre de quelques minutes ce qui est trop long pour certaines applications à grandes cadences. Le temps ouvert d'un adhésif thermofusible est le temps disponible pour effectuer le collage, entre le moment où est appliqué l'adhésif à l'état fondu sur le premier support à coller et le moment où l'adhésif thermofusible n'est plus assez fluide pour permettre d'assembler correctement le deuxième support.

Un autre type d'adhésif thermofusible réticulable a été développé à partir des copolymères éthylène-acétate de vinyle hydroxylé réagissant avec un polyisocyanate bloqué en quantité stoechiométrique, comme décrit dans le brevet européen EP 294 271. Ces adhésifs thermofusibles, compatibles avec les résines collantes (tackifiantes), possèdent de bonnes propriétés adhésives, mais présentent l'inconvénient de nécessiter des traitements thermiques postérieurs à des températures d'au moins 120° C pendant plusieurs minutes pour assurer leur bonne réticulation. De telles conditions de collages ne sont pas acceptables pour certains supports fragiles thermiquement.

EP 380 379 décrit des compositions adhésives thermofusibles réticulables se présentant sous forme d'un prépolymère contenant des fonctions isocyanates libres, le dit prépolymère résulte de la réaction d'un copolymère de l'éthylène et de l'acétate de vinyle contenant des fonctions hydroxyles avec un polyisocyanate. Cet art antérieur décrit les copolymères obtenus par copolymérisation directe de l'éthylène, de l'acétate de vinyle et de l'acrylate d'hydroxyéthyle ainsi que les copolymères éthylène-acétate de vinyle-alcool vinylique obtenus par hydrolyse partielle de copolymères éthylène-acétate de vinyle.

Les compositions de la présente invention ont une meilleure tenue au test SAFT et au pelage en T que les compositions de l'art antérieur à base de copolymères éthylène / acétate de vinyle / monomère hydroxylé.

Les fonctions hydroxyles du copolymère (A) peuvent être apportées :
- par greffage ou par copolymérisation d'un monomère insaturé ayant au moins une fonctions hydroxyle.
- par greffage ou par copolymérisation d'un monomère insaturé puis réaction de ce monomère avec un produit apportant au moins une fonction hydroxyle.
- par modification d'un monomère greffé ou copolymérisé pour créer au moins une fonction hydroxyle.

La présente invention concerne aussi ces copolymères (A).

A titre d'exemple d'ester d'acide carboxylique insaturé formant avec l'éthylène la base du copolymère (A), on peut citer les (méth)acrylates d'alkyle, les alkyles ayant de 1 à 24 atomes de carbone.

On peut citer les (méth)acrylates de méthyle, d'éthyle de n-butyle, d'isobutyle, de 2-éthylhéxyle.

Le copolymère (A) peut donc être un copolymère de l'éthylène d'un ester d'acide carboxylique insaturé et d'un monomère greffé ou copolymérisé choisi par exemple parmi le (méth)acrylate d'hydroxyéthyle, ou d'un anhydride d'acide carboxylique, l'alcool allylique ou la N-hydroxyméthylacrylamide.

Le copolymère (A) peut être aussi un copolymère de l'éthylène, d'un ester d'acide carboxylique insaturé et d'un acide carboxylique ou d'un anhydride d'acide carboxylique (greffé ou copolymérisé) neutralisé par un diol, ou un polyétherdiol tel que l'éthylène glycol, le polyéthylène glycol, le polypropylène glycol ou le polytétraméthylène glycol.

Le copolymère (A) peut être aussi un copolymère de l'éthylène d'un ester d'acide carboxylique insaturé et d'un ester vinylique carboxylique saturé (greffé ou copolymérisé) qu'on a hydrolysé.

Avantageusement, le copolymère (A) est choisi parmi :
- les copolymères de l'éthylène, d'un (méth)acrylate d'alkyle et du (méth)acrylate d'hydroxyéthyle obtenus par polymérisation directe des trois monomères.
- les copolymères de l'éthylène, d'un (méth)acrylate d'alkyle et du (méth)acrylate de polyéthylène glycol.

Le copolymère (A) contient avantageusement en poids 40 à 95 % d'éthylène, 4 à 40 % d'ester d'acide carboxylique insaturé et 1 à 15 % de monomère contenant au moins une fonction hydroxyle. Le melt index du copolymère (A) selon ASTM D 1238-73 est compris avantageusement entre 1 et 1 000 (g/10 mn). La viscosité du copolymère (A) à l'état fondu est avantageusement comprise entre 100 et 10 000 Pa.s.

Le copolymère (A) contient de préférence de 2 10⁻³ à 15 10⁻² mole OH pour 100 g de copolymère.

Ce copolymère (A) réagit avec un polyisocyanate, de préférence un diisocyanate, avantageusement aliphatique, cycloaliphatique ou aromatique. On utilise un excès de polyisocyanate pour qu'il reste des NCO libres.

Parmi les diisocyanates préférés, on peut citer le 2,4-toluylène-diisocyanate (TDI), diphénylméthane-diisocyanate (MDI), hexaméthylène-diisocyanate (HMDI) et isophorone-diiso-cyanate (IPDI). On utilise avantageusement le MDI.

Dans les présentes compositions, il reste des fonctions isocyanates libres. De préférence, la teneur en fonctions NCO libres est comprise entre 1 à 5 % en poids de fonctions NCO libres, par rapport au poids total de l'adhésif. De préférence, cette teneur est de 2 à 3 %. Cette teneur permet de réaliser un bon compromis entre la vitesse de réticulation de l'adhésif (après collage) et sa stabilité à chaud (avant collage).

Avantageusement, le prépolymère est préparé en présence d'un mono alcool.

Les compositions selon la présente invention peuvent en outre contenir: (on les appellera par simplification "additifs" dans la suite du texte)
- une ou plusieurs résines tackifiantes, dans un rapport résine/polymère pouvant varier de 0 à 3. Les résines tackifiantes préférées sont aliphatiques ou aliphato-aromatique (y compris les résines terpéniques naturelles ou synthétiques) et ne contiennent pas de fonctions réactives avec les isocyanates, les compositions de l'invention contenant des résines tackifiantes ont avantageusement une viscosité à l'état fondu comprise entre 0,1 et 100 Pa.s.
- des cires, des plastifiants, des charges, des stabilisants chimiquement neutres vis-à-vis des isocyanates.

Les résines tackifiantes ou les cires faiblement hydroxylées sont utilisables à condition de tenir compte des fonctions hydroxyles qu'elles apportent dans le calcul du rapport NCO total/OH total et de diminuer en proportion, la quantité d'alcool simple utilisée pour la réaction avec l'excès de polyisocyanate.

Ces résines tackifiantes, cires, plastifiants sont utilisées de façon connue dans les adhésifs thermofusibles pour modifier la viscosité, le temps ouvert, et le pouvoir collant.

Il est recommandé que les compositions de l'invention possèdent une viscosité déterminée, c'est-à-dire suffisamment fluide, pour permettre une prise de collage rapide à température relativement basse en milieu atmosphérique en vue de réaliser un collage pouvant résister par la suite jusqu'à une température d'au moins 150° C.

Les compositions de l'invention ne contiennent essentiellement pas de fonctions OH libres.

La présente invention concerne aussi la préparation des compositions précitées.

Les compositions de l'invention peuvent être préparées par mélange à l'état fondu des différents constituants.

A la température du mélange, inférieure habituellement entre 110 et 130°C, la réaction entre les NCO et les OH est rapide et s'effectue en quelques heures au maximum. Le prépolymère obtenu réticule au contact de l'humidité atmosphérique : il convient, pour sa bonne conservation, de le stocker à l'abri de l'humidité.

Selon une variante, la présente invention a aussi pour objet un procédé de préparation d'une composition comprenant les étapes suivantes :
(i) fusion et séchage du copolymère (A) éventuellement des additifs ;
(ii) addition et réaction d'un alcool et du polyisocyanate jusqu'à obtention du taux de NCO recherché.

Ainsi, dans la pratique, on peut procéder comme suit :
les adhésifs thermofusibles selon l'invention sont avantageusement fabriqués en une seule étape selon le procédé suivant :
- tous les constituants de la formule, à l'exception du diisocyanate et du mono alcool sont préalablement fondus à 110-130° C et séchés sous pression réduite dans un réacteur agité. Le réacteur est purgé par de l'azote sec;
- le mono alcool sec puis le diisocyanate sont alors introduits en proportions convenables et la réaction isocyanate-alcool poursuivie à 120-125° C jusqu'à obtention du taux de NCO théorique, ce qui demande environ 4 heures. A la fin de la réaction, l'adhésif thermofusible prêt à l'emploi est récupéré par coulée. Dans le cas des diisocyanates aromatiques, on opère en général en l'absence de catalyseur. Pour les diisocyanates moins réactifs (IPDI), il est possible de faire appel à des catalyseurs connus de la réaction NCO/OH tels que les sels d'étain (laurate de dibutylétain) ou les amines (diazabicyclo-octane).

Les copolymères (A) sont pré-réagis à 110 -130° C avec un diisocyanate classiquement utilisé tels que les 2-4-toluylène-diisocyanate (TDI), diphénylméthane-diiso-cyanate (MDI), hexaméthylène-diisocyanate (HMDI), isophorone-diisocyanate (IPDI). En raison de sa plus faible toxicité, c'est le MDI qui est le diisocyanate préféré de l'invention. La réaction terpolymère/diisocyanate est conduite en présence d'un fort excès molaire de diisocyanate afin d'éviter toute augmentation indésirée de la viscosité.

L'excès nécessaire dépend de la teneur en OH du copolymère (A) et du diisocyanate utilisé (un diisocyanate dont les deux fonctions NCO ont la même réactivité (MDI) exigent un excès molaire plus grand qu'un diisocyanate dont les deux fonctions NCO n'ont pas la même réactivité (TDI). Pour un taux de monomère hydroxylé de 2 % environ, on opère par exemple dans le cas du MDI avec un rapport NCO total/OH copolymère (A) de 15 à 25 environ. Le diisocyanate en excès est ensuite neutralisé par ajout d'un mono alcool simple (alcool laurique, alcool stéarique) ou d'un mélange monoalcool-dialcool, de telle sorte que le rapport final NCO total/OH total soit compris entre 1,5 et 2,5, et de préférence 1,8 à 2,2.

La viscosité des adhésifs de l'invention à leur température de mise en oeuvre (130° C) est typiquement de 5 à 10 Pa.s. Après stockage à 130° C pendant 4 heures, au contact de l'atmosphère, l'accroissement de viscosité des adhésifs de l'invention est de l'ordre de 10 %, ce qui permet une mise en oeuvre industrielle sans problème dans les machines existantes (NORDSON MELTEX par exemple).

Ainsi, la présente invention fournit des adhésifs thermofusibles monocomposants, qui offrent une facilité de mise en oeuvre, une stabilité de stockage élevée -soit plusieurs mois à 25° C et plusieurs heures à 130-140° C, des viscosités de mise en oeuvre ≤ 10 Pa.s, un temps ouvert approprié de 5 à 40 s, une cohésion initiale élevée, une température de fluage sous charge qui augmente au fur et à mesure de l'avancement de la réticulation, une souplesse du produit après réticulation complète. La réticulation s'effectue entre quelques heures et quelques jours selon la température et l'humidité ambiante.

### Exemples

La teneur en isocyanate libre des adhésifs selon l'invention est exprimée ci-après en grammes de NCO pour 100 g d'adhésif. On la détermine selon la norme AFNOR 52132.

L'indice de fluidité (Ml) est mesuré à 190° C, sous 2,16 kg, selon la norme ASTM D 1238-73 et exprimé en g/10 mn.

Dans les exemples suivants, pour l'évaluation des compositions de l'invention, nous considérons les propriétés suivantes :
- mesure du SAFT (Shear adhesion failure temperature) selon ASTM D 4498 :
   utilisation de plaques d'aluminium de dimension :
   100 mm x 25 mm x 1 mm de type AG3.
   Délimiter avec un marqueur une zone de 25 mm x 25 mm en bout d'éprouvette.
   Placer quatre plaquettes puis quatre autres accolées dans le sens de la longueur qui serviront de cales sur le plateau de la thermopresse à 150° C ou toute autre température d'utilisation.
   Verser l'adhésif en fusion sur les parties à en coller (aluminium).
   Appliquer quatre autres éprouvettes afin d'obtenir des surfaces encollées de 25 mm x 25 mm.
   Presser pendant cinq secondes à 250 da N. Stocker les éprouvettes à 23°C pendant au moins quatre heures.
   Accrocher un poids de 0,5 kg à chaque extrémité et placer l'ensemble dans une étuve programmée pour une montée en température de 0,4 ° C/minute.
   Le jour même du collage, noter la température à laquelle le poids tombe, c'est-à-dire à l'instant où il y a rupture du joint de colle. Faire une moyenne des quatre mesures.
- test de pelage en T sur aluminium selon norme ASTM D 1876-72.
   Utilisation de feuilles d'aluminium de dimension :
   100 mm x 25 mm et d'épaisseur 120 µm.
   Placer trois feuilles sur la thermopresse à 150° C ou toute autre température de mélangeage.
   Verser l'adhésif en fusion sur les parties à encoller. Appliquer trois autres feuilles par dessus après avoir déposé une bande de papier siliconé en bout d'éprouvette pour créer une amorce. Presser pendant trente secondes à 250 da N. Stocker à 23° C pendant au moins quatre heures. Procéder au test de pelage en T sur le dynamomètre à 250 mm/min. Faire la moyenne des trois mesures. Nous utilisons une enceinte climatique (circulation d'azote liquide) afin de réaliser le test de pelage en T à - 30° C.

### Exemple 1

Dans un malaxeur BRABENDER, régulé à 90° C et dont les pales toument à 50 tours par minute, on introduit :
- 29,2 g d'un terpolymère de composition en poids :
   70 % d'éthylène
   25 % d'acrylate de butyle
   5 % d'acrylate d'hydroxyéthyle

L'indice de fluidité du terpolymère (melt index) est de 10 (mesuré à 190° C - 2,16 kg selon la norme ASTM D-1238). Sa viscosité à l'état fondu est de 8 000 Pa.s.
- 12,6 g de résine terpène-phénol (DERTOPHENE ®)
- 12,6 g de cire éthylène/acétate de vinyle (Cire AC 430 ®)

Quand le mélange est homogène et sa température stabilisée à 90° C, on introduit 2,8 g d'isophorone diisocyanate. Le malaxage est maintenu pendant 10 minutes. La préparation de viscosité d'environ 100 Pa.s est sortie du malaxeur, puis utilisée pour réaliser les collages d'éprouvettes d'aluminium.

La série d'éprouvettes est séparée en 4 lots. Les 4 lots sont évalués selon la méthode de fluage en cisaillement SAFT (Shear Adhesion Failure Temperature).

Un lot No 1 d'éprouvettes est conservé à l'abri de l'humidité puis mesuré le lendemain du collage.

Un lot No 2 d'éprouvettes est maintenu pendant 7 jours à 70° C en présence de vapeur d'eau saturante , puis mesuré 24 heures après avoir été sorti de ce traitement de vieillissement humide accéléré.

Un lot No 3 d'éprouvettes est mesuré après être resté 7 jours en atmosphère et température ambiantes.

Un lot No 4 d'éprouvettes est mesuré après être resté 14 jours en atmosphère et température ambiantes.

Par simplification, on désigne les compositions de l'invention par EDA HEA. On compare ces compositions avec des compositions réalisées de la même manière sauf que le copolymère est à base d'acétate de vinyle dans les mêmes proportions (25 %), on désigne les compositions adhésives obtenues par EVA HEA.

Les résultats sont reportés sur le tableau 1 suivant :

**Tableau 1**

| | **SAFT (°C)** | | **Pelage en T à - 30 °C (N/cm)** | |
|---|---|---|---|---|
| | **EVA HEA** | **EDA HEA** | **EVA HEA** | **EDA HEA** |
| Lot No 1 | 85 | 95 | 0 | 1 |
| Lot No 2 | 211 | 220 | 1,5 | 3,5 |
| Lot No 3 | 138 | 150 | 0,5 | 2 |
| Lot No 4 | 227 | 240 | 0,7 | 2,5 |

### Exemple 2

Dans un malaxeur BRABENDER, régulé à 75° C et dont les pales tournent à 50 tours par minute, on introduit :
- 32 g d'un terpolymère de composition en poids :
   71,1 % d'éthylène
   25 % d'acrylate de butyle
   3,9 % d'acrylate d'hydroxyéthyle

L'indice de fluidité du terpolymère (melt index) est de 250 mesuré dans les conditions de l'exemple 1. Sa viscosité à l'état fondu est de 1 000 Pa.s.
- 16 g de résine terpène-phénol (DERTOPHENE T ®).

Quand le mélange est homogène et sa température stabilisée à 75° C, on introduit 3,6 g d'isophorone diisocyanate.

La préparation possède une viscosité d'environ 100 Pa.s. Elle est utilisée, comme dans l'exemple 1, pour réaliser des collages d'éprouvettes d'aluminium, la température étant de 60° C.

On compare avec des compositions réalisées de la même manière sauf que les 25 % d'acrylate sont remplacés par 25 % d'acétate de vinyle. Les résultats sont reportés sur le tableau 2 suivant.

**Tableau 2**

| | **SAFT (°C)** | | **Pelage en T à - 30° C (N/cm)** | |
|---|---|---|---|---|
| | **EVA HEA** | **EDA HEA** | **EVA HEA** | **EDA HEA** |
| Conditionnement No 1 : Evaluation juste après collage | 71 | 76 | 0 | 2,0 |
| Evaluation après 1 semaine de vieillissement naturel ou humide accéléré | 213 | 235 | 0,5 | 3,0 |

### Exemple 3

Dans un malaxeur BRABENDER, régulé à 70° C et dont les pales tournent à 50 tours par minute, on introduit :
- 15 g d'un terpolymère de composition en poids :
   82,7 % d'éthylène
   6,3 % d'acrylate de butyle
   11 % d'alcool vinylique

L'indice de fluidité du terpolymère (melt index) est de 160 mesuré dans les conditions de l'exemple 1. Sa viscosité à l'état fondu est de 1 500 Pa.s.
- 15,6 g de copolymère de composition suivante :
   72 % d'éthylène
   28 % d'acrylate de butyle d'indice de fluidité (melt index) de 900 vendu sous la marque LOTRYL par la demanderesse.

- 15,6 g de résine terpène-phénol (NIREZ - V 2040 HM de chez ARIZONA)

Quand le mélange est homogène et sa température stabilisée à 70° C on introduit 13 g d'isophorone diisocyanate.

La viscosité à l'état fondu du mélange est d'environ 100 Pa.s. Le collage d'éprouvettes d'aluminium est réalisé à 70° C pendant 1 minute sous 1 bar.

On compare avec des composites réalisées de la même manière sauf que les 6,3 % et les 28 % d'acrylate de butyle sont remplacés par de l'acétate de vinyle. Ces résultats sont reportés dans le tableau 3 suivant.

**Tableau 3**

| | **SAFT (°C)** | | **Pelage en T à - 30° C (N/cm)** | |
|---|---|---|---|---|
| | **EVA HEA** | **EDA HEA** | **EVA HEA** | **EDA HEA** |
| Evaluation juste après collage | 67 | 77 | 0 | 2,5 |
| Evaluation après 7 jours de vieillissement humide accéléré | 220 | 237 | 0,5 | 3,5 |

## Revendications

1. Compositions adhésives thermofusibles réticulables sous forme de prépolymère contenant des fonctions isocyanates libres, le dit prépolymère résulte de la réaction d'un polyisocyanate et d'un copolymère (A) de l'éthylène et d'au moins un ester d'acide carboxylique insaturé et contenant des fonctions hydroxyles.

2. Compositions selon la revendication 1 dans lesquelles le copolymère (A) est un copolymère de l'éthylène, d'un ester d'acide carboxylique insaturé et d'un monomère greffé ou copolymérisé choisi parmi le (méth)acrylate d'hydroxyéthyle, l'alcool allylique ou la N-hydroxyméthylacrylamide.

3. Compositions selon la revendication 1 dans lesquelles le copolymère (A) est un copolymère de l'éthylène, d'un (méth)acrylate d'alkyle et du (méth)acrylate de polyéthylène glycol.

4. Compositions selon l'une quelconque des revendications précédentes dans lesquelles la teneur en fonction NCO libres est comprise entre 1 et 5 % en poids.

5. Compositions selon l'une quelconque des revendications précédentes, comprenant en plus des additifs tels qu'une résine tackifiante, selon un rapport en poids résine/polymère au plus égal à 3.

6. Procédé de préparation d'une composition selon l'une quelconque des revendications précédentes, caractérisé en ce qu'il comprend les étapes suivantes :
(i) fusion et séchage du copolymère (A), éventuellement des additifs ;
(ii) addition et réaction d'un alcool et du polyisocyanate jusqu'à obtention du taux de NCO recherché.

7. Copolymère de l'éthylène et d'au moins un ester d'acide carboxylique et contenant des fonctions hydroxyles.

8. Copolymère selon la revendication 7 dans lequel la fonction hydroxyle est apportée par greffage ou copolymérisation du (méth)acrylate d'hydroxyéthyle, de l'alcool allylique ou de la N-hydroxyméthyleacrylamide.

9. Copolymère selon la revendication 7 dans lequel la fonction hydroxyle résulte de la neutralisation de l'acide (méth)acrylique ou d'un anhydride d'acide carboxylique greffé ou copolymérisé, par un diol.
